# EUROPÄISCHE PATENTSCHRIFT

(11) **EP 2 420 702 B1**
(45) Veröffentlichungstag und Bekanntmachung des Hinweises auf die Patenterteilung: **11.09.2013**
(21) Anmeldenummer: 11005636.3
(22) Anmeldetag: 09.07.2011
(51) Int. Cl.: F16H 57/08, F16H 57/04

(54) **Druckölschmierung der Zahnräder eines Planetengetriebes**
Pressure oil lubrication of the cogs of a planetary gear
Lubrification par huile sous pression des roues dentées d'un train épicycloïdal

(30) Priorität: 19.08.2010 DE 102010034750; 19.02.2011 DE 102011011796; 09.06.2011 DE 102011103725
(43) Veröffentlichungstag der Anmeldung: 22.02.2012
(73) Patentinhaber: Robert Bosch GmbH, 70469 Stuttgart (DE)
(72) Erfinder: Floren, Ansgar, 58093 Hagen (DE); Strasser, Dirk, 58339 Breckerfeld (DE); Bauer, Gerhard, 58453 Witten (DE)
(74) Vertreter: Thürer, Andreas

(56) Entgegenhaltungen:
- EP-A1- 0 164 968
- EP-A2- 1 717 489
- EP-A2- 1 876 338
- DE-U- 7 216 863
- US-A- 4 271 928

## Beschreibung

Die Erfindung betrifft ein Planetengetriebe mit einer in einem Getriebegehäuse umlaufenden Planetenstufe, aufweisend einen insbesondere mit einem Rotor verbundenen Planetenträger, der durch Stege miteinander verbundene Planetenstegwangen aufweist, und mehrere in mit dem Planetenträger verbundenen Planetenradlagern gelagerte Planetenräder, die einerseits mit einem Sonnenrad und andererseits mit einem Hohlrad in Eingriff stehen, wobei weiterhin in dem Getriebegehäuse ein Ölzuführungskanal vorgesehen ist, der mit zumindest einem Ölführungskanal in dem Planetenträger verbunden ist, wobei in jeden Steg zumindest ein mit dem Ölführungskanal verschalteter Kanal eingelassen ist, der auf Bereiche eines Zahneingriffs Sonnenrad Planetenrad und/oder Planetenrad Hohlrad ausgerichtet ist.

Ein derartiges Planetengetriebe ist aus der EP 1 876 338 A2 bekannt. Dieses Planetengetriebe ist für eine Gasturbine ausgelegt und weist einen Planetenträger auf, in den ölführende Kanäle eingelassen sind, die auf Bereiche eines Zahneingriffs eines Sonnenrads und der damit im Eingriff stehenden Planetenräder ausgerichtet ist. Zusätzlich weist der Planetenträger zumindest einen weiteren Ölführungskanal auf, der über ein Verbindungsstück mit einer externen Spritzdüse verbunden ist, die auf eine Zahnradpaarung ausgerichtet ist.

Die EP 1 717 489 A2 offenbart ein Planetengetriebe für ein Windkraftanlagengetriebe. In den Planetenträger sind ölführende Kanäle eingelassen, die endseitige Spritzdüsen aufweisen, die als separate Einzeldüsen ausgebildet sind.

Aus der EP 0 164 968 A1 ist ein Planetengetriebe bekannt, das ebenfalls eine Drückölschmierung der verschiedenen Zahnradpaarungen aufweist. Auch diese Druckschmierung weist extern an entsprechende Kanäle angebundene Spritzdüsen auf.

Ein anderes Planetengetriebe ist aus der US 4,271,928 bekannt. Dieses Planetengetriebe weist wiederum in Planetenträger eingelassene Schmierölkanäle auf.

Ein ähnliches Planetengetriebe ist aus der DE 72 16 863 U bekannt.

Ein weiteres Planetengetriebe ist aus der JP 200 516 36 66 A bekannt. Dieses Planetengetriebe weist eine Druckölschmierung der Planetenradlager auf.

Aus DE 12 26 383 B ist ein Planetengetriebe bekannt, das einen Ölsumpf aufweist, wobei in dem Bereich des Getriebegehäuses, in welchen ein durchlaufendes Planetenrad in einen Ölsumpf eintaucht, neben dem Zahneingriff mit dem Hohlrad ortsfeste seitliche Abdeckungen angeordnet sind, von denen eine mit einer Öffnung versehen ist. An dieser Öffnung schließt sich eine durch ein Rückschlagventil absperrbare Rohrleitung mit sich verzweigenden Schmiermittelförderleitungen zu den Schmierstellen des Getriebes an. Eine dieser Schmierförderleitungen führt zu einer Brause. Auch dieses Planetengetriebe weist eine Ölsumpfschmierung der verschiedenen Zahneingriffe auf.

Der Erfindung liegt die Aufgabe zu Grunde, die Schmierung der Zahneingriffe bei einem Planetengetriebe zu verbessern.

Diese Aufgabe wird dadurch gelöst, dass in den Kanal ein Düsenkörper eingesetzt ist und dass der Düsenkörper ein Verbindungselement aufweist, an dem ein Düsenteil und ein Düsenbauteil befestigt sind. Zunächst einmal bedeutet die Ausrichtung der Kanäle auf Bereiche eines Zahneingriffs in diesem Zusammenhang zentral auf den jeweiligen Zahneingriff oder auf eine Zone vor oder hinter dem Zahneingriff.

Dieses Schmiersystem ist zunächst einmal unabhängig von dem Schmiersystem für die Planetenradlager, kann aber von einer gemeinsamen *Schmiermittelpumpe und auch von einem gemeinsamen Ölführungskanal mit Öl versorgt werden. Dieses Schmiersystem stellt weiterhin eine Abkehr von der bekannten Ölsumpfschmiertechnologie dar und ermöglicht es somit eine Trockensumpfschmierung bei dem Planetengetriebe einzusetzen. Da für die Schmierung der Zahneingriffe keine gesonderte Schmierölpumpe und Zuführleitung benötigt wird, ist die efindungsgemäße Lösung zudem kostengünstig umsetzbar. Der in den Kanal eingesetzte Düsenkörper ist zur gezielten Zuführung von Öl vor oder auch hinter den Zahneingriff der entsprechenden Zahnpaarungen vorgesehen, wobei der Düsenkörper weiterhin ein Verbindungselement aufweist, an dem ein Düsenteil und ein Düsenbauteil befestigt sind. Das Düsenteil und das Düsenbauteil sind mit zumindest je einer Bohrung versehen, durch die das Öl zur Schmierung des jeweiligen Zahneingriffs austritt. Der Kanal und folglich der Düsenkörper mit dem Düsenteil und dem Düsenbauteil sind so in den Steg eingelassen bzw. ausgerichtet, dass das Düsenteil auf den Zahneingriff eines Planetenrads und dem Sonnenrad ausgerichtet ist. Das Düsenbauteil ist dagegen auf den Zahneingriff eines Planetenrads und des Hohlrads ausgerichtet. Somit werden mit einem einzigen Düsenkörper zwei unterschiedliche Zahneingriffe geschmiert. Dabei ist jedem Planetenrad zumindest ein Düsenkörper zugeordnet.

In Weiterbildung der Erfindung ist das Düsenteil zylinderförmig ausgebildet und weist eine Düsenteilbohrung auf, die auf einen Bereich des Zahneingriffs Planetenrad zu Sonnenrad ausgerichtet ist. In entsprechender Ausgestaltung weist das Düsenbauteil eine Düsenbauteilbohrung auf, die auf einen Bereich des Zahneingriffs des Planetenrads zu Hohlrad ausgerichtet ist.

In Weiterbildung der Erfindung ist das Düsenbauteil kegelig oder zylinderförmig ausgebildet und weist ein Außengewinde auf. Der Düsenkörper wird zur Montage in einen Kanal eingesetzt und das Düsenbauteil wird mit dem Außengewinde in ein korrespondierendes Innengewinde, das endseitig in den Kanal eingearbeitet ist, eingeschraubt. Dazu ist neben der Düsenbauteilbohrung ein Schlitz oder ähnliches zum Ansetzen eines Eindrehwerkzeugs eingelassen. Das Düsenbauteil bzw. das Außengewinde ist so ausgelegt, dass sich eine vollständige Öldichtheit zu dem Kanal ergibt. Alternativ ist es denkbar, eine angenäherte Öldichtheit vorzusehen. In weiterer Ausgestaltung ist vorgesehen, dass das Düsenteil zumindest angenähert öldicht in den Kanal eingesetzt sind. Dazu ist das Düsenteil korrespondierend zu dem Kanaldurchmesser zylindrisch ausgebildet und so dimensioniert, dass sich bei guter Montierbarkeit die annähernde oder vollständige Öldichtheit gegenüber dem Kanal ergibt.

In Weiterbildung der Erfindung ist das Verbindungsteil mit dem Düsenteil und/oder dem Düsenbauteil verstemmt. Dadurch wird im Ergebnis eine formschlüssige Verbindung der Bauteile hergestellt, die den gestellten Anforderungen voll genügt. Insbesondere, wenn keine vollkommene Öldichtheit gefordert ist, ist diese Verbindung gut geeignet.

In einer weiteren Ausgestaltung der Erfindung ist das Verbindungsteil mit dem Düsenteil und/oder dem Düsenbauteil verklebt. Auch diese Verbindung erfüllt die gestellten Anforderungen. Auch ist es im Rahmen der Erfindung vorgesehen, das Verbindungsteil mit dem Düsenteil und/oder dem Düsenbauteil sowohl zu verstemmen, als auch zusätzlich zu verkleben. Durch diese Kombination der Verbindungen ist problemlos eine öldichte Ausgestaltung der Verbindung herstellbar. Ein geeigneter Kleber ist beispielsweise Loctite 603.

In vorteilhafter Weiterbildung der Erfindung ist in das Verbindungsteil zumindest eine endseitige Blindbohrung eingelassen. Eine solche Blindbohrung erleichtert den Verstemmvorgang, der grundsätzlich durch ein Ansetzen eines geeigneten Werkzeugs wie beispielweise eines Meißels zwischen den Bauteilen und anschließenden Eintreiben einer Verstemmung durch beispielsweise eine Schlageinwirkung auf den Meißel erfolgen kann. Bei Vorhandensein einer Blindbohrung steht das Verbindungsteil bevorzugt geringfügig über eine Aufnahmeöffnung in dem Düsenteil und/oder dem Düsenbauteil hervor und der vorstehende Teil des Verbindungsteils kann beispielsweise mit einem Kegeldorn aufgeweitet und mit dem Düsenteil und/oder dem Düsenbauteil verstemmt oder verklemmt werden. Um ein definiertes Aufschubmaß des Düsenteils und/oder des Düsenbauteils auf das Verbindungsteil zu gewährleisten, ist das Verbindungsteil mit einem Einstich versehen, der eine Tiefe aufweist, die dem vorgesehenen Aufschubmaß entspricht. Selbstverständlich sind im Rahmen der Erfindung aber auch noch andere Verbindungsausgestaltungen zwischen dem Verbindungsteil und dem Düsenteil und/oder dem Düsenbauteil, wie beispielsweise Schweißen oder Löten, denkbar.

In Weiterbildung der Erfindung sind in den Steg zwei oder mehr über einen Verbindungskanal mit den Ölführungskanal verbundene Kanäle eingelassen. Der Verbindungskanal ist dabei so angeordnet, dass er im Bereich des Verbindungselements des Düsenkörpers in den jeweiligen Kanal einmündet. Das Verbindungselement weist einen geringeren Durchmesser als das Düsenteil und das Düsenbauteil auf, so dass das Öl in dem Kanal das Verbindungselement umströmend zu dem Düsenteil und dem Düsenbauteil geführt wird.

In weiterer Ausgestaltung der Erfindung sind die Kanäle verschiedener Stege an unterschiedlichen Stellen bezogen auf die jeweilige Zahnbreite in dem Steg angeordnet. Dadurch ergeben sich bei zwei Kanälen pro Steg und bei einem Planetengetriebe mit drei Planetenrädern und entsprechend drei Stegen sechs unterschiedliche Düsenlagen über die Zahnbreite. Dadurch ist eine gleichmäßige Schmierung der Zahneingriffe sichergestellt. Das Planetengetriebe kann aber selbstverständlich auch mehr als drei Planetenräder und entsprechend viele Stege aufweisen. Auch ist es vorgesehen, mehr als zwei Kanäle in jeden Steg einzulassen.

Weitere vorteilhafte Ausgestaltungen der Erfindung sind der Zeichnungsbeschreibung zu entnehmen, in der ein in den Figuren dargestelltes Ausführungsbeispiel näher beschrieben ist.

Es zeigen:
- Figur 1: einen Schnitt durch eine Planetenstufe eines Planetengetriebes,
- Figur 2: einen Schnitt durch einen erfindungsgemäßen Düsenkörper,
- Figur 3: einen Schnitt durch einen zwei Planetenstegwangen verbindenden Steg mit zwei eingelassenen Kanälen und
- Figur 4: einen Schnitt durch einen weiteren erfindungsgemäßen Düsenkörper.

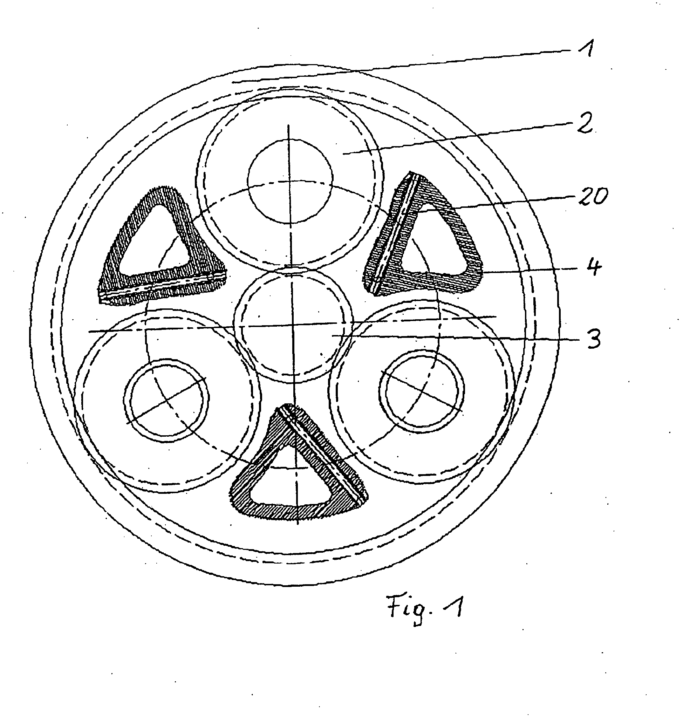

Der in der Figur 1 dargestellte Schnitt durch eine Planetenstufe eines Planetengetriebes zeigt ein Hohlrad 1, drei Planetenräder 2 und ein Sonnenrad 3, die miteinander in Zahneingriff stehen, indem jedes Planetenrad 2 in bekannter Weise sowohl mit dem Hohlrad 1 als auch dem Sonnenrad 3 in Zahneingriff steht. Die Planetenräder 2 sind in einem Planetenträger angeordnet und gelagert, wobei der Planetenträger zwei seitliche Planetenstegwangen aufweist, die über Stege 4 in sogenannter Herzchenform miteinander verbunden sind. Die Stege 4 füllen den Bereich zwischen den einzelnen Planetenräder 2 zumindest teilweise aus. Weiterhin sind durch die Planetenräder 2 Achsen mit Planetenradlagern hindurchgeführt, die ebenfalls mit den Planetenstegwangen verbunden sind. Das gesamte Planetengetriebe ist in einem nicht dargestellten Getriebegehäuse eingebaut. Das so aufgebaute Planetengetriebe ist beispielsweise als Generatorgetriebe für Windkraftanlagen ausgebildet. Dabei kann dann der Planetenträger mit dem Rotor der Windkraftanlage verschaltet sein. Der Planetenträger kann allgemein auch ein nicht drehendes Bauteil sein. Auch kann der Planetenträger im Innern eines mehrstufigen Getriebes angeordnet sein. Ein Beispiel ist ein Differenzialgetriebe mit zwei drehenden und einem stehenden Planetenträger.

In jeden Steg 4 sind Kanäle 20 eingelassen, beispielsweise eingebohrt, die die Stege 4 vollständig durchdringen und zu einem Zahneingriff zwischen einem Planetenrad 2 und dem Sonnenrad 3 sowie auf den Zahnkranz des Hohlrades 1 ausgerichtet sind.

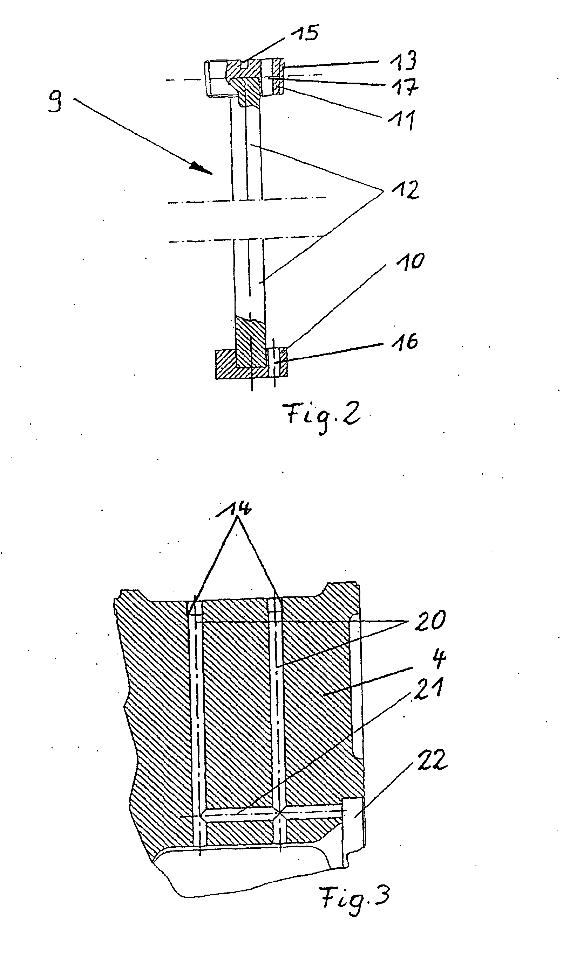

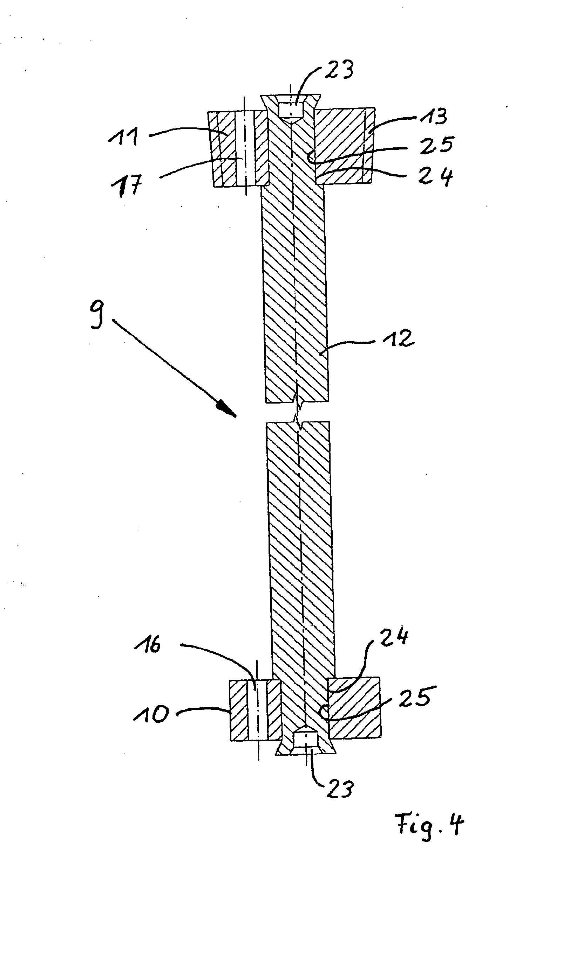

In jeden dieser Kanäle 20 ist ein in Figur 2 oder Figur 4 dargestellter Düsenkörper 9 eingesetzt. Der Düsenkörper 9 weist ein Verbindungselement 12 auf, an dem endseitig je ein Düsenteil 10 und ein Düsenbauteil 11 befestigt sind. Das Verbindungselement 12 und das Düsenteil 10 sowie das Düsenbauteil 11 können aus einem metallischen Werkstoff gefertigt sein und dementsprechend die Bauteile durch Löten oder Schweißen miteinander verbunden sein. Das Düsenteil 10 ist zylindrisch ausgebildet und weist einen Durchmesser auf, der zumindest angenähert dem Innendurchmesser des Kanals 20 entspricht. Dadurch ist bei guter Montierbarkeit eine zumindest annähernd vollständige Öldichtigkeit an der entsprechenden Verbindungsstelle gegeben. Das Düsenbauteil 11 ist leicht kegelig ausgebildet und weist ein Außengewinde 13 auf. Dieses Außengewinde 13 korrespondiert dichtend mit einem Innengewinde 14, dass endseitig in jeden Kanal 20 (Figur 3) eingearbeitet ist. Weiterhin weist das Düsenbauteil 11 einen Schlitz 15 zum Ansetzen eines Eindrehwerkzeugs auf.

Sowohl das Düsenteil 10 als auch das Düsenbauteil 11 weisen eine Düsenteilbohrung 16 und eine Düsenbauteilbohrung 17 auf. Jede dieser Bohrungen ist so angebracht, dass sie außerhalb des Außenumfangs des Verbindungselements 12 angeordnet ist.

Der in Figur 3 dargestellte Steg 4 weist zwei Kanäle 20 auf, in die jeweils ein Düsenkörper 9 eingesetzt bzw. eingeschraubt ist. Der Düsenkörper 9 erstreckt sich durch jeweils den gesamten Kanal 20 und das Düsenbauteil 11 schließt bündig mit dem oberen freien Ende des Stegs 4 und das Düsenteil 10 mit dem unteren freien Ende des Steges ab. Die Kanäle 20 sind über einen Verbindungskanal 21 miteinander verbunden, wobei der Verbindungskanal 21 weiterhin mit einem Ölführungskanal 22 verschaltet ist. Der Verbindungskanal 21 wirkt im Bereich des Verbindungselements 12 mit den Kanälen 20 zusammen, so dass zugeführtes Öl entlang dem Verbindungselement 12 zu dem Düsenteil 10 und dem Düsenbauteil 11 gelangt und durch die Düsenteilbohrung und die Düsenbauteilbohrung gespritzt wird. Der Ölführungskanal 22 ist ggf. über weitere Verbindungen mit einer Schmierölpumpe zur Förderung des Öls verschaltet.

Die Kanäle 20 sind beabstandet zueinander in den Steg 4 eingelassen, wobei bei unterschiedlichen Stegen 4 (siehe Figur 1) die Kanäle jeweils an unterschiedlichen Stellen bezogen auf die Zahnbreite der angespritzten Zahnpaarung ausgerichtet sind. Somit ergeben sich bei zwei Kanälen 20 je Steg 4 sechs unterschiedliche Düsenlagen über die Zahnbreite.

Figur 4 zeigt wie Figur 2 einen Düsenkörper 9, der ein Verbindungselement 12 aufweist, an dem endseitig je ein Düsenteil 10 und ein Düsenbauteil 11 befestigt sind. Im Unterschied zu Figur 2 ist hier das Verbindungsteil 12 mit dem Düsenteil 10 und dem Düsenbauteil 11 verstemmt. Dadurch wird im Ergebnis eine formschlüssige Verbindung der Bauteile hergestellt.

Um den Verstemmvorgang zu vereinfachen, sind in das Verbindungsteil 12 endseitige Blindbohrungen 23 eingelassen und das Verbindungsteil 12 steht geringfügig über Aufnahmeöffnungen 25 in dem Düsenteil 10 und dem Düsenbauteil 11 hervor und der vorstehende Teil des Verbindungsteils 12 kann beispielsweise mit einem Kegeldorn aufgeweitet und mit dem Düsenteil und/oder dem Düsenbauteil verstemmt werden. Um ein definiertes Aufschubmaß des Düsenteils 10 und des Düsenbauteils 11 auf das Verbindungsteil 12 zu gewährleisten, ist das Verbindungsteil mit endseitigen Einstichen 24 versehen, die eine Tiefe aufweisen, die dem vorgesehenen Aufschubmaß entspricht.

### Bezugszeichenliste

- 1: Hohlrad
- 2: Planetenrad
- 3: Sonnenrad
- 4: Steg
- 9: Düsenkörper
- 10: Düsenteil
- 11: Düsenbauteil
- 12: Verbindungselement
- 13: Außengewinde
- 14: Innengewinde
- 15: Schlitz
- 16: Düsenteilbohrung
- 17: Düsenbauteilbohrung
- 20: Kanal
- 21: Verbindungskanal
- 22: Ölführungskanal
- 23: Blindbohrung
- 24: Einstich
- 25: Aufnahmeöffnung

## Patentansprüche

1. Planetengetriebe mit einer in einem Getriebegehäuse umlaufenden Planetenstufe, aufweisend einen insbesondere mit einem Rotor verbundenen Planetenträger, der durch Stege (4) miteinander verbundene Planetenstegwangen aufweist, und mehrere in mit dem Planetenträger zusammenwirkenden Planetenradlagern gelagerte Planetenräder (2), die einerseits mit einem Sonnenrad (3) und andererseits mit einem Hohlrad (1) in Eingriff stehen, wobei weiterhin in dem Getriebegehäuse ein Ölzuführungskanal vorgesehen ist, der mit zumindest einem Ölführungskanal (22) in dem Planetenträger verbunden ist, wobei in jeden Steg (4) zumindest ein mit dem Ölführungskanal (22) verschalteter Kanal (20) eingelassen ist, der auf Bereiche eines Zahneingriffs Sonnenrad (3) Planetenrad (2) und/oder Planetenrad (2) Hohlrad (1) ausgerichtet ist,
**dadurch gekennzeichnet, dass** in den Kanal (20) ein Düsenkörper (9) eingesetzt ist und dass der Düsenkörper (9) ein Verbindungselement (12) aufweist, an dem ein Düsenteil (10) und ein Düsenbauteil (11) befestigt sind.

2. Planetengetriebe nach Anspruch 1,
**dadurch gekennzeichnet, dass** das Düsenteil (10) zylinderförmig ausgebildet ist und eine Düsenteilbohrung (16) aufweist, die auf den Eingriff Planetenrad (2) Sonnenrad (3) ausgerichtet ist.

3. Planetengetriebe nach Anspruch 1 oder 2,
**dadurch gekennzeichnet, dass** das Düsenbauteil (11) eine Düsenbauteilbohrung (17) aufweist, die auf den Eingriff Planetenrad (2) Hohlrad (1) ausgerichtet ist.

4. Planetengetriebe nach Anspruch 3,
**dadurch gekennzeichnet, dass** das Düsenbauteil (11) kegelig oder zylinderförmig ausgebildet ist und ein Außengewinde aufweist.

5. Planetengetriebe nach einem der Ansprüche 1 bis 4,
**dadurch gekennzeichnet, dass** das Düsenteil (10) und/oder das Düsenbauteil (11) zumindest angenähert öldicht in den Kanal (20) eingesetzt sind.

6. Planetengetriebe nach einem der Ansprüche 1 bis 5,
**dadurch gekennzeichnet, dass** das Verbindungselement (12) mit dem Düsenteil (10) und/oder dem Düsenbauteil (11) verstemmt ist.

7. Planetengetriebe nach einem der Ansprüche 1 bis 6,
**dadurch gekennzeichnet, dass** das Verbindungselement (12) mit dem Düsenteil (10) und/oder dem Düsenbauteil (11) verklebt ist.

8. Planetengetriebe nach einem der Ansprüche 1 bis 7,
**dadurch gekennzeichnet, dass** in das Verbindungselement zumindest eine endseitige axiale Blindbohrung (23) eingelassen ist.

9. Planetengetriebe nach einem der vorherigen Ansprüche,
**dadurch gekennzeichnet, dass** in den Steg (4) zwei oder mehr über einen Verbindungskanal (21) verbundene Kanäle (20) eingelassen sind.

10. Planetengetriebe nach einem der vorherigen Ansprüche,
**dadurch gekennzeichnet, dass** die Kanäle (20) verschiedener Stege (4) an unterschiedlichen Stellen bezogen auf die jeweilige Zahnbreite der Zahnradpaarung Sonnenrad (3) Planetenrad (2) und/oder Planetenrad (2) Hohlrad (1) in den Stegen (4) angeordnet sind.

## Claims

1. Planetary gear set with a planet stage revolving in a gear set housing, having a planet carrier which is connected in particular to a rotor and has planet web cheeks which are connected to one another by means of webs (4), and a plurality of planet gears (2) which are mounted in planet gear bearings, which interact with the planet carrier, and are in engagement on one side with a sun gear (3) and on the other side with a ring gear (1), wherein, furthermore, the gear set housing is provided with an oil supply channel which is connected to at least one oil-guiding channel (22) in the planet carrier, wherein at least one channel (20) connected to the oil-guiding channel (22) is embedded in each web (4), said channel being aligned with regions of a meshing engagement between sun gear (3) and planet gear (2) and/or between planet gear (2) and ring gear (1), **characterized in that** a nozzle body (9) is inserted into the channel (20), and **in that** the nozzle body (9) has a connecting element (12) to which a nozzle part (10) and a nozzle component (11) are fastened.

2. Planetary gear set according to Claim 1, **characterized in that** the nozzle part (10) is of cylindrical design and has a nozzle part bore (16) which is aligned with the engagement between planet gear (2) and sun gear (3).

3. Planetary gear set according to Claim 1 or 2, **characterized in that** the nozzle component (11) has a nozzle component bore (17) which is aligned with the engagement between planet gear (2) and ring gear (1).

4. Planetary gear set according to Claim 3, **characterized in that** the nozzle component (11) is of conical or cylindrical design and has an external thread.

5. Planetary gear set according to one of Claims 1 to 4, **characterized in that** the nozzle part (10) and/or the nozzle component (11) are/is inserted into the channel (20) in an at least approximately oil-tight manner.

6. Planetary gear set according to one of Claims 1 to 5, **characterized in that** the connecting element (12) is calked to the nozzle part (10) and/or to the nozzle component (11).

7. Planetary gear set according to one of Claims 1 to 6, **characterized in that** the connecting element (12) is adhesively bonded to the nozzle part (10) and/or to the nozzle component (11).

8. Planetary gear set according to one of Claims 1 to 7, **characterized in that** at least one end-side axial blind bore (23) is embedded in the connecting element.

9. Planetary gear set according to one of the preceding claims, **characterized in that** two or more channels (20) which are connected via a connecting channel (21) are embedded in the web (4).

10. Planetary gear set according to one of the preceding claims, **characterized in that** the channels (20) of different webs (4) are arranged in the webs (4) at different locations based on the particular tooth width of the gear pairing of sun gear (3) and planet gear (2) and/or planet gear (2) and ring gear (1).

## Revendications

1. Train épicycloïdal comportant un étage planétaire tournant dans un boîtier d'engrenages, comprenant un porte-planétaire relié en particulier à un rotor, lequel porte-planétaire comprend des joues de porte-planétaire reliées les unes aux autres par des éléments jointifs (4), et plusieurs roues planétaires (2) montées dans des paliers de roue planétaire coopérant avec le porte-planétaire, lesquelles roues planétaires s'engrènent d'une part avec une roue solaire (3) et d'autre part avec une couronne (1), un canal d'alimentation en huile étant en outre prévu dans le boîtier d'engrenages, lequel canal d'alimentation en huile est relié à au moins un canal de guidage d'huile (22) dans le porte-planétaire, au moins un canal (20) connecté au canal de guidage d'huile (22) étant intégré dans chaque élément jointif (4), lequel canal est orienté vers des régions d'un engrènement entre la roue solaire (3) et une roue planétaire (2) et/ou entre une roue planétaire (2) et la couronne (1),
**caractérisé en ce qu'**un corps de buse (9) est inséré dans le canal (20) et **en ce que** le corps de buse (9) comprend un élément de liaison (12) auquel sont fixés une partie de buse (10) et un composant de buse (11).

2. Train épicycloïdal selon la revendication 1,
**caractérisé en ce que** la partie de buse (10) est cylindrique et comprend un alésage de partie de buse (16) qui est orienté vers l'engrènement entre une roue planétaire (2) et la roue solaire (3).

3. Train épicycloïdal selon la revendication 1 ou 2,
**caractérisé en ce que** le composant de buse (11) comprend un alésage de composant de buse (17) qui est orienté vers l'engrènement d'une roue planétaire (2) avec la couronne (1).

4. Train épicycloïdal selon la revendication 3,
**caractérisé en ce que** le composant de buse (11) est conique ou cylindrique et comprend un filetage extérieur.

5. Train épicycloïdal selon l'une quelconque des revendications 1 à 4,
**caractérisé en ce que** la partie de buse (10) et/ou le composant de buse (11) sont insérés dans le canal (20) au moins approximativement de manière étanche à l'huile.

6. Train épicycloïdal selon l'une quelconque des revendications 1 à 5,
**caractérisé en ce que** l'élément de liaison (12) est maté avec la partie de buse (10) et/ou le composant de buse (11).

7. Train épicycloïdal selon l'une quelconque des revendications 1 à 6,
**caractérisé en ce que** l'élément de liaison (12) est collé sur la partie de buse (10) et/ou le composant de buse (11).

8. Train épicycloïdal selon l'une quelconque des revendications 1 à 7,
**caractérisé en ce qu'**au moins un alésage borgne axial d'extrémité (23) est intégré dans l'élément de liaison.

9. Train épicycloïdal selon l'une quelconque des revendications précédentes,
**caractérisé en ce que** deux ou plus de deux canaux (20) reliés par le biais d'un canal de liaison (21) sont intégrés dans l'élément jointif (4).

10. Train épicycloïdal selon l'une quelconque des revendications précédentes,
**caractérisé en ce que** les canaux (20) de différents éléments jointifs (4) sont disposés en différents emplacements par rapport à la largeur de dent respective de la paire de roues dentées roue solaire (3)/roue planétaire (2) et/ou roue planétaire (2)/couronne (1) dans les éléments jointifs (4).
